# EUROPÄISCHE PATENTSCHRIFT

(11) **EP 3 681 741 B1**
(45) Veröffentlichungstag und Bekanntmachung des Hinweises auf die Patenterteilung: **04.08.2021**
(21) Anmeldenummer: 18773723.4
(22) Anmeldetag: 10.09.2018
(51) Int. Cl.: B60H 3/00, F24F 8/30

(54) **FAHRZEUGKLIMAANLAGEN-AUSLASSEINHEIT**
VEHICLE AIR-CONDITIONING SYSTEM OUTFLOW UNIT
UNITÉ DE SORTIE POUR CLIMATISEUR DE VÉHICULE

(30) Priorität: 13.09.2017 DE 102017121195
(43) Veröffentlichungstag der Anmeldung: 22.07.2020
(73) Patentinhaber: Valeo Klimasysteme GmbH, 96476 Bad Rodach (DE)
(72) Erfinder: SONNENBERGER, Rainer, 96476 Bad Rodach (DE); NEUMAIER, Gerhard, 96476 Bad Rodach (DE)
(74) Vertreter: Prinz & Partner mbB
(86) Internationale Anmeldenummer: PCT/EP2018/074332
(87) Internationale Veröffentlichungsnummer: WO 2019/052956

(56) Entgegenhaltungen:
- JP-A- S52 149 730
- JP-A- S52 152 036
- JP-A- 2002 136 893
- JP-A- 2008 056 196

## Beschreibung

Die Erfindung betrifft eine Fahrzeugklimaanlagen-Auslasseinheit mit zumindest einem von einer Wand umgebenen Kanal und einer mit einer Spannungsquelle verbundenen Elektrode.

Fahrzeugklimaanlagen sowie Auslasseinheiten für Fahrzeugklimaanlagen sind bekannt. Ferner ist es bekannt, unter Hochspannung stehende Elektroden in Klimaanlagen einzusetzen, um einen mit Ionen aufbereiteten Luftstrom bereitzustellen. Hierbei ragt ein mit einer Spitze versehener Abschnitt der Elektrode, in einen luftdurchströmten Kanal der Fahrzeugklimaanlage. Durch die hohe Spannung von einem Kilovolt und mehr bildet sich an der Spitze ein starkes elektrisches Feld mit einer hohen Feldstärke aus. Mit der Folge, dass geladene Teilchen im Luftstrom beschleunigt und Elektronen durch Feldemission aus der Spitze gelöst, d.h. emittiert, werden. Die freien Elektronen sowie die beschleunigten Teilchen bilden über Anlagerung oder Stoßionisation weitere Ionen und führen somit zu einer Ionisation des Luftstroms.

Ein hoher Ionengehalt, insbesondere von negativen Sauerstoffionen, wird mit vielen positiven Effekten in Verbindung gebracht, die das Wohlbefinden eines Menschen steigern sollen. Unter anderem sollen negative Sauerstoffionen die natürlichen Abwehrkräfte des Körpers verbessern, Gerüche neutralisieren, das Wachstum von Bakterien und Viren verringern, das Risiko von allergischen Reaktionen reduzieren, die Konzentrationsfähigkeit erhöhen sowie einen positiven Effekt auf die Stressresistenz haben.

In der JP 2002 136893 A, der JP S52 149730 A, der JP 2008 056196 A sowie der JP S52 152036 A sind Auslasseinheiten für Fahrzeugklimaanlagen mit nadelförmigen Elektroden gezeigt, die sich jeweils linear in einem Kanal der Auslasseinheit erstrecken.

Im Automobilbereich ist man aus Gründen der Effizienz stets bestrebt, Bauteile mit möglichst geringem Gewicht und Bauraumbedarf einzusetzen. Eine weitere Priorität gilt der Nutzung von Optimierungspotentialen zur Reduzierung der Herstellungskosten. Ferner ist es Ziel, die Betriebsgeräusche aller Einrichtungen im Fahrzeug zu minimieren, um den Komfort für die Fahrzeuginsassen zu erhöhen.

Aufgabe der Erfindung ist es daher, eine kompakte, kostengünstig herstellbare sowie laufruhige Fahrzeugklimaanlagen-Auslasseinheit bereitzustellen.

Die vorstehend genannte Aufgabe wird erfindungsgemäß durch eine Fahrzeugklimaanlagen-Auslasseinheit gemäß dem unabhängigen Anspruch 1 gelöst. Die Fahrzeugklimaanlagen-Auslasseinheit ist mit zumindest einem von einer Wand umgebenen Kanal und einer mit einer Spannungsquelle verbundenen Elektrode vorgesehen. Die Elektrode umfasst zumindest einen in den zumindest einen Kanal hineinragenden abgewinkelten Abschnitt zur Ionisierung der durch den zumindest einen Kanal strömenden Luft. Der zumindest eine abgewinkelte Abschnitt weist dabei eine im zumindest einen Kanal frei endende Spitze und einen mit der Spitze endenden Endabschnitt auf. Die Elektrode weist einen im Bereich der Wand vorhandenen Halterungsabschnitt auf. Ferner verläuft der in den zumindest einen Kanal hineinragende Abschnitt des zumindest einen abgewinkelten Abschnitts im zumindest einen Kanal frei, d.h. ohne Stütze zur Wand. Somit ist die Elektrode sicher befestigt und es sind keine Stützstrukturen im Kanal erforderlich. Hierdurch wird der Strömungswiderstand durch die Elektrode nicht wesentlich erhöht und die Auslasseinheit kann kostengünstig hergestellt werden.

Des Weiteren weist die Spitze hierbei in Strömungsrichtung, was die Ablösung der Elektronen bzw. die Bildung von Ionen im Luftstrom verbessert, wie Versuche herausgestellt haben. Ferner kommt es zu einer geringeren Wirbelbildung im Luftstrom, als wenn die Spitze sich quer zur Strömungsrichtung erstreckte. Somit ist die Auslasseinheit besonders laufruhig.

Gemäß einer Ausführungsform endet die Spitze in der Mitte des Kanalquerschnitts bzw. in der Nähe der Mitte des Kanalquerschnitts. Hierdurch ist die Spitze in dem Bereich des Kanals mit dem größten Volumenstrom angeordnet, wodurch die Menge der im Luftstrom erzeugten Ionen besonders hoch ist. Ferner ist durch diese Gestaltung der Abstand der Spitze zu allen Kanalwänden besonders groß, sodass die Zahl der Ionen minimiert wird, die im weiteren Strömungsverlauf die Wand berühren und neutralisiert werden.

Es kann vorgesehen sein, dass sich an den Endabschnitt ein Verbindungsabschnitt einstückig anschließt, der sich bis zum Halterungsabschnitt der Elektrode erstreckt und der zusammen mit dem Endabschnitt eine L-Form ergibt. Insbesondere kann dabei der Verbindungsabschnitt in einem Winkel im Bereich von 60-120°, vorzugsweise 90° zur Erstreckung der Spitze verlaufen, d.h. in die Richtung verlaufen, in die Spitze weist. Auf diese Weise ist die Spitze über den Verbindungsabschnitt mit dem Halterungsabschnitt der Elektrode verbunden und kann sowohl zum Verbindungsabschnitt als auch zum Halterungsabschnitt abgewinkelt verlaufen. Somit kann sich die Spitze selbst dann in Strömungsrichtung erstrecken, wenn der Verbindungsabschnitt, insbesondere unter einem Winkel von 90° zur Erstreckung des Kanals, von der Kanalwand in den Kanal verläuft. Dies hat den Vorteil, dass der Verbindungsabschnitt vergleichsweise kurz ausgeführt werden kann, wodurch zum einen Material eingespart und zu anderen die Steifigkeit des Verbindungsabschnitts erhöht werden kann.

Gemäß einer Ausführungsform kann der Übergang vom Verbindungsabschnitt zum Endabschnitt durch bogenförmig verlaufende Randbereiche begrenzt sein, wodurch eine Ablösung von Elektronen unterdrückt werden kann.

Gemäß einer weiteren Ausführungsform kann der Endabschnitt auf einer dem Verbindungsabschnitt abgewandten Seite einen konvex geformten Randbereich haben, der die Form einer Hälfte eines zweidimensionalen Tropfens hat. Dieser Randbereich bildet einen in Seitenansicht des Endabschnitts gesehenen Bauch, der eine vorteilhafte Leitung des Luftstroms am Endabschnitt entlang und an der Spitze vorbei bereitstellt und somit zu einer verbesserten Ionisierung des Luftstroms führt.

Der Halterungsabschnitt kann unter Bildung einer Halterung umspritzt sein, wodurch die Elektrode sicher aufgenommen ist sowie einfach, beispielsweise im oder am Gehäuse, befestigt bzw. gelagert werden kann.

Alternativ kann der Halterungsabschnitt in die Wand eingespritzt werden, ist dann aber nicht wechselbar.

In einer weiteren Ausführungsform können der Verbindungsabschnitt und/oder der Endabschnitt zumindest abschnittsweise umspritzt sein, um den Strömungsverlauf in ihrem Bereich zu optimieren. Die Spitze der Elektrode ist hierbei jedoch nicht umspritzt und liegt frei.

Ferner kann vorgesehen sein, dass die Elektrode aus einem Flachmaterial gebildet ist, wobei die entgegengesetzt zueinander angeordneten Flachseiten des zumindest einen abgewinkelten Abschnitts parallel zur Strömungsrichtung verlaufen.

Insbesondere weist dabei die Spitze in der Ebene, in der sich das Flachmaterial erstreckt, einen Krümmungsradius auf, der höchstens der halben Dicke des Flachmaterials entspricht, d.h. die Spitze ist besonders klein und damit die elektrische Feldstärke sehr hoch.

Im Sinne der Erfindung ist ein Flachmaterial ein Material mit einer im Wesentlichen gleichmäßigen Materialdicke, die im Bereich von 0,001 mm bis 0,3 mm liegt.

Das Flachmaterial wird durch ein Material gebildet, das sich zur Ausbildung einer Elektrode zur Ionisierung eines Luftstroms eignet, wie X10CrNi18-8 oder 18CR9Ni. Durch die geringe Dicke des Flachmaterials und die Ausrichtung des in den Kanal hineinragenden Abschnitts parallel zur Strömungsrichtung wird der Strömungswiderstand durch die Elektrode nur in geringem Maße erhöht. Ferner werden durch diese Ausrichtung die Kräfte reduziert, die auf den in den Kanal hineinragenden Abschnitt wirken, wodurch dieser besonders dünn ausgebildet sein kann. Das Bilden der Elektrode aus einem Flachmaterial hat ferner den Vorteil, dass die Elektrode ein Stanzteil sein kann oder durch Laserschneiden gebildet werden kann. Hierdurch ist die Elektrode sehr kostengünstig herstellbar.

In einer weiteren Ausführungsform sind mehrere nebeneinanderliegende Kanäle vorgesehen, in welche abgewinkelte Abschnitte mit im Wesentlichen identischer Geometrie hineinragen. Sämtliche abgewinkelte Abschnitte gehen hierbei im Bereich einer Halterung in einem gemeinsamen Halterungsabschnitt einstückig ineinander über.

Insbesondere kann die Elektrode im Bereich der Halterung umspritzt sein. Der Vorteil dieser Ausführungsform ist, dass eine einzelne Elektrode zur Ionisierung von mehreren nebeneinanderliegenden Kanälen vorgesehen sein kann. Auf diese Weise kann die Auslasseinheit besonders kompakt und kostengünstig ausgebildet sein.

Die Elektrode kann, wie erwähnt, aus einem Flachmaterial gebildet sein und einen Halterungsabschnitt umfassen, wobei der zumindest eine abgewinkelte Abschnitt an den Halterungsabschnitt angrenzt und abschnittsweise in den zumindest einen Kanal hineinragt. Insbesondere kann der Halterungsabschnitt parallel zum angrenzenden Wandabschnitt verlaufen und/oder der zumindest eine abgewinkelte Abschnitt kann bis zum Endabschnitt im Wesentlichen senkrecht zum angrenzenden Wandabschnitt in Richtung Kanalmitte verlaufen. Hierdurch können der Halterungsabschnitt besonders nahe am Kanal angeordnet werden und die abgewinkelten Abschnitte besonders kurz ausgebildet sein. Somit können der Raumbedarf sowie das Gewicht der Auslasseinheit reduziert werden. Ferner ist die Ionisierung des Luftstroms optimiert, wenn die Spitze in der Kanalmitte endet.

Weitere Vorteile und Merkmale ergeben sich aus der nachfolgenden Beschreibung in Verbindung mit den beigefügten Zeichnungen. In diesen zeigen:
- Figur 1 in einer perspektivischen Darstellung eine Auslasseinheit gemäß einer erfindungsgemäßen Ausführungsform mit einer Elektronikeinheit und einer Elektrodenbaugruppe mit einer Elektrode,
- Figur 2 eine schematische Schnittansicht der Auslasseinheit aus Figur 1,
- Figur 3 in einer Explosionsdarstellung die Elektronikeinheit und die Elektrodenbaugruppe aus Figur 1,
- Figur 4 in einer perspektivischen Darstellung die Elektronikeinheit und die Elektrodenbaugruppe aus Figur 1,
- Figur 5 in einer perspektivischen Darstellung die Elektrode aus Figur 1,
- Figur 6 in einer Seitenansicht die Elektrode aus Figur 5, und
- Figuren 7 bis 14 in einer perspektivischen Darstellung verschiedene Montageschritte für den Auseinanderbau der Auslasseinheit aus Figur 1.

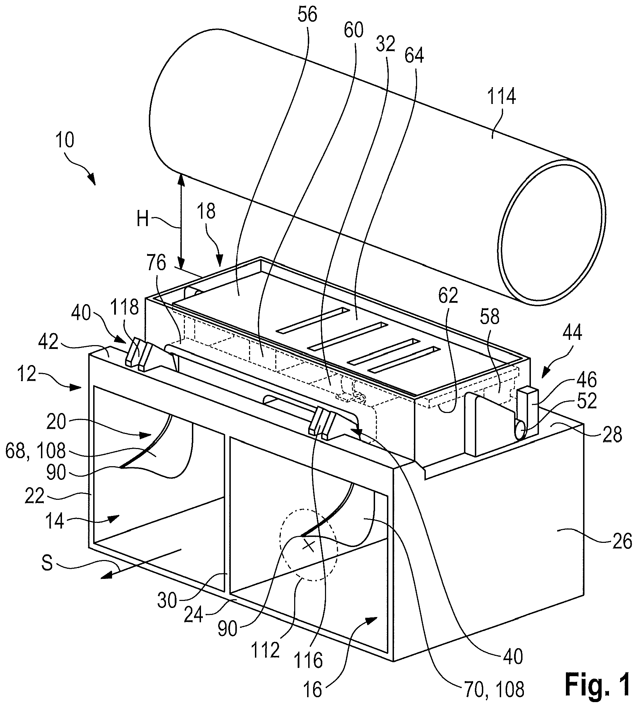

In Figur 1 ist eine Fahrzeugklimaanlagen-Auslasseinheit 10 einer Klimaanlage eines Kraftfahrzeugs gezeigt. Die Auslasseinheit 10 umfasst ein Gehäuse 12 mit einem ersten Kanal 14 und einem zweiten Kanal 16 sowie eine Elektronikeinheit 18 und eine Elektrode 20.

Die Kanäle 14, 16 werden im Betrieb der Klimaanlage jeweils von einem Luftstrom in Strömungsrichtung S durchströmt, der mittels der Elektrode 20 ionisiert werden kann. In der gezeigten Ausführungsform sind die Kanäle 14, 16 dazu vorgesehen, klimatisierte Luft im Frontbereich des Kraftfahrzeuginnenraums bereitzustellen. In einer alternativen Ausführungsform können die Kanäle 14, 16 dazu vorgesehen sein, klimatisierte Luft in beliebigen, insbesondere voneinander unterschiedlichen, Bereichen des Innenraums bereitzustellen.

Die Auslasseinheit 10 ist in Strömungsrichtung S insbesondere direkt vor einem gitterförmigen Luftauströmer als Übergang zum Innenraum angeordnet, um möglichst viele der teilweise sehr kurzlebigen Ionen im Fahrzeuginnenraum bereitzustellen.

Senkrecht zur Strömungsrichtung S sind die Kanäle 14, 16 von mehreren Wänden 22, 24, 26, 28 umgeben, wobei die Kanäle 14, 16 durch eine gemeinsame Zwischenwand 30 voneinander getrennt sind.

Die Wände 22, 24, 26, 28 und die Zwischenwand 30 bilden für jeden der Kanäle 14, 16 einen im Wesentlichen rechteckigen Kanalquerschnitt senkrecht zur Strömungsrichtung S. Die Zwischenwand 30 ist dabei mittig zwischen den Seitenwänden 22, 26 angeordnet, wodurch die Kanäle 14, 16 einen im Wesentlichen gleich großen Kanalquerschnitt haben.

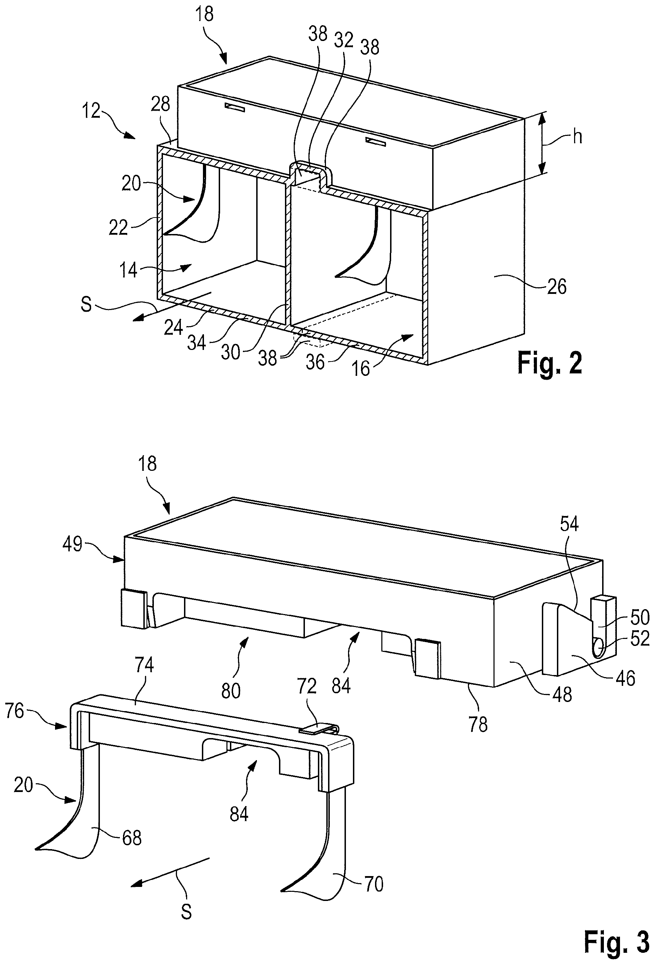

Das Gehäuse 12 weist an seiner an die Elektronikeinheit 18 angrenzenden Wand 28 einen Vorsprung 32 in Form einer Rippe auf (Figur 2), der senkrecht von der Wand 28 sowie von dem Kanal 16 nach außen absteht und sich in Strömungsrichtung S erstreckt. Der Vorsprung 32 ist ferner versetzt zur zentral angeordneten Zwischenwand 30 vorgesehen und damit asymmetrisch zu den Kanälen 14, 16 und der Elektronikeinheit 18 angeordnet.

Das Gehäuse 12 ist einstückig ausgebildet. In einer alternativen Ausführungsform kann das Gehäuse 12 aus mehreren Gehäusebauteilen bestehen.

Insbesondere können die Kanäle 14, 16 durch separate Gehäusebauteile 34, 36 gebildet sein, die über Verbindungsstege 38 miteinander verbunden sind. Diese Ausführungsform ist in Figur 2 mittels der strichlinierten Elemente dargestellt.

In diesem Fall kann der Vorsprung 32 durch ein oder mehrere Verbindungsstege 38 gebildet sein, wodurch diese zwei Funktionen in sich vereinen.

Die Verbindungsstege 38, die zur Verbindung der Gehäusebauteile 34, 36 vorgesehen sind, sind beispielsweise Nut- und Federverbindungen.

Das Gehäuse 12 umfasst ferner eine Einführhilfe 40 (siehe Figur 1), die auf einem Steg 42 vorgesehen ist, der sich auf der Wand 28, d.h. entgegengesetzt zu den Kanälen 14, 16, quer zur Strömungsrichtung S von der Seitenwand 22 zur Seitenwand 26 erstreckt.

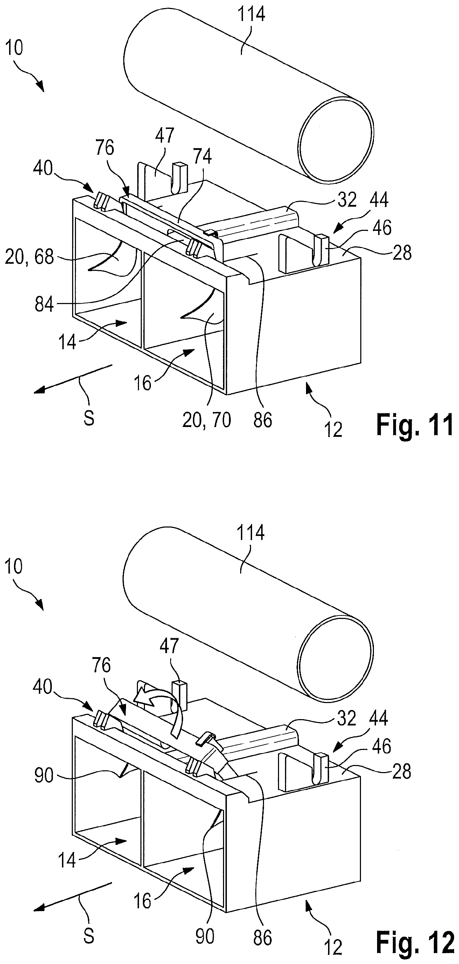

Des Weiteren ist eine Ankervorrichtung 44 am Gehäuse 12 vorgesehen, die sich von der Wand 28 nach außen, d.h. von den Kanälen 14, 16 weg, erstreckt und zur Verankerung der Elektronikeinheit 18 vorgesehen ist. Die Ankervorrichtung 44 umfasst zwei plattenförmiger Ankereinrichtungen 46, 47 (siehe Figur 11), die parallel zu den Seitenwänden 22, 26 verlaufen und auf entgegengesetzten Seiten 48, 49 der Elektronikeinheit 18 angeordnet sind (siehe Figur 3). Jede Ankereinrichtung 46, 47 hat einen schlitzförmigen Ankerabschnitt 50, der zur Lagerung eines entsprechenden Ankerzapfens 52 der Elektronikeinheit 18 ausgebildet ist, sowie eine Einführschräge 54, die zur Führung des entsprechenden Ankerzapfens 52 in den Ankerabschnitt 50 vorgesehen ist.

Die Elektronikeinheit 18 (siehe Figur 1) umfasst eine Platine 56 mit elektronischen Bauteilen 58 sowie einen Transformator 60, der zur Erzeugung der Hochspannung für die Elektrode 20 vorgesehen ist.

Der Transformator 60 ist dazu ausgebildet, die für die Ionisierung erforderliche Spannung von 3kV bereitzustellen.. Ferner kann der Transformator 60 dazu ausgebildet sein, höhere Spannungen, beispielsweise von bis zu 10 kV, bereitzustellen.

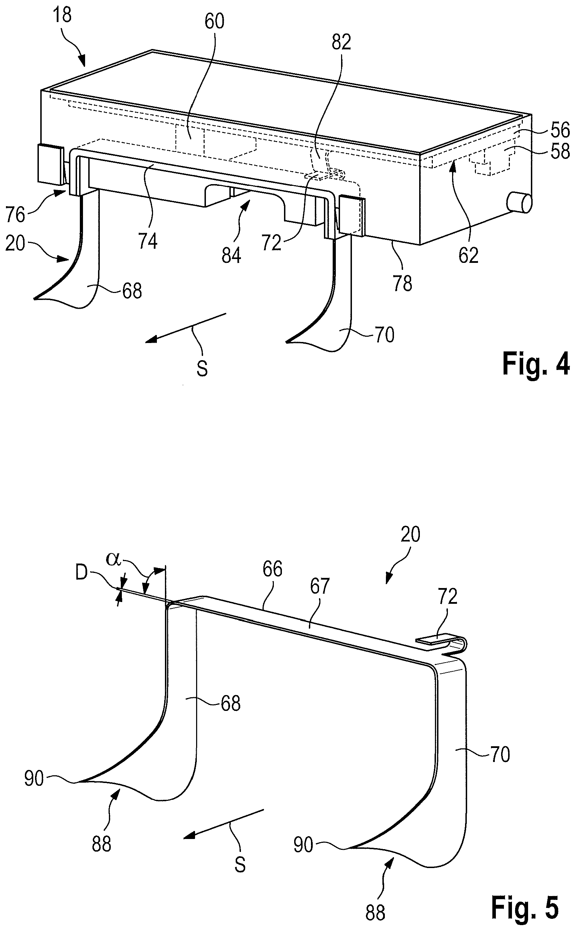

Die Platine 56 ist parallel zur Wand 28 angeordnet und weist eine den Kanälen 14, 16 zugewandte Vorderseite 62 und eine entgegengesetzte Rückseite 64 auf (siehe Figur 1). Die elektronischen Bauteile 58 und der Transformator 60 sind auf der Vorderseite 62 vorgesehen und erstrecken sich von der Platine 56 in Richtung der Kanäle 14, 16 (siehe Figur 4). Auf der Rückseite 64 der Platine 56 stehen, abgesehen von Befestigungs- oder Kontaktmitteln, wie Kontaktfüßen, der elektronischen Bauteile 58 bzw. des Transformators 60, keine elektronischen Bauteile von der Platine 56 ab. Indem die Platine 56 nur einseitig bestückt ist, ist sie besonders flach und damit kompakt aufgebaut. Alternativ kann die Platine 56 auf ihrer Vorderseite 62 mit sogenannten Surface Mounted Devices (SMD) bestückt sein, sodass von der Rückseite 64 keine Befestigungs- oder Kontaktmittel abstehen und die Elektronikeinheit 18 somit noch flacher ausgeführt sein kann.

Die Elektrode 20 umfasst einen Halterungsabschnitt 66 und zwei an entgegengesetzten Enden des Halterungsabschnitts 66 angrenzende abgewinkelte Abschnitte 68, 70, die zusammen mit dem Halterungsabschnitt 66 ein U-Profil bilden (siehe Figur 5).

Am Halterungsabschnitt 66 ist ein nach oben abstehendes, U-förmiges Kontaktteil 72 in Form eines Kontaktfingers vorgesehen.

Die abgewinkelten Abschnitte 68, 70 stehen senkrecht zu dem Halterungsabschnitt 66, d.h. unter einem Winkel α von 90°. Alternativ kann jeder der abgewinkelten Abschnitte 68, 70 unter einem beliebigen Winkel α zum Halterungsabschnitt 66 angeordnet sein.

Die gesamte Elektrode 20 ist aus einem Flachmaterial gebildet und der Halterungsabschnitt 66, die abgewinkelten Abschnitte 68, 70 sowie das Kontaktteil 72 sind einstückig miteinander verbunden.

Das Flachmaterial weist eine homogene Materialdicke D von 0,1 mm auf. Alternativ kann die Materialdicke im Bereich von 0,001 mm bis 0,3 mm liegen.

Das Material, aus dem die Elektrode 20 gebildet ist, ist X10CrNi18-8. In einer alternativen Ausführungsform kann die Elektrode 20 aus einem beliebigen Material gebildet sein, das sich zur Ausbildung einer Elektrode 20 zur Ionisierung eines Luftstroms eignet, beispielsweise 18CR9Ni.

Die Elektrode 20 ist ein Stanzteil, das insbesondere in seine endgültige Form gebogen wurde. Alternativ kann die Elektrode 20 beispielsweise mittels Laserschneiden aus einem Flachmaterial geschnitten und anschließend durch Biegen geformt werden.

In einer alternativen Ausführungsform können die abgewinkelten Abschnitte 68, 70 an beliebigen Stellen an den Halterungsabschnitt 66 angrenzen. Insbesondere wenn die Elektrode 20 mehr als zwei abgewinkelte Abschnitte 68, 70 umfasst, können die abgewinkelten Abschnitte 68, 70 zwischen den zwei entgegengesetzten Enden des Halterungsabschnitts 66 angrenzen, insbesondere seitlich.

Der Halterungsabschnitt 66 sowie die an den Halterungsabschnitt 66 angrenzenden Abschnitte der abgewinkelten Abschnitte 68, 70 sind unter Bildung einer Halterung 74 umspritzt. Die Halterung 74 und die Elektrode 20 bilden zusammen eine Elektrodenbaugruppe 76.

Die Elektronikeinheit 18 weist an ihrer in Strömungsrichtung S stromabwärts gelegenen, den Kanälen 14, 16 zugewandten Kante 78 eine Aussparung 80 auf, die komplementär zur Elektrodenbaugruppe 76 ausgebildet ist und zur formschlüssigen Aufnahme der Elektrodenbaugruppe 76 vorgesehen ist. Im zusammengesetzten Zustand haben die Elektronikeinheit 18 und die Elektrodenbaugruppe 76 im Wesentlichen die Form eines Quaders.

In der Aussparung 80 weist die Elektronikeinheit 18 einen Gegenkontakt 82 auf, der dem Kontaktteil 72 gegenüberliegend angeordnet ist und den elektrischen Kontakt zwischen der Elektrode 20 und der Elektronikeinheit 18 herstellt, sodass die vom Transformator 60 generierte Hochspannung an der Elektrode 20 bereitgestellt werden kann (siehe Figur 4).

Um einen sicheren Kontakt zwischen dem Kontaktteil 72 und dem Gegenkontakt 82 zu gewährleisten, können das Kontaktteil 72 und der Gegenkontakt 82 unter Vorspannung federnd angestellt aneinander anliegen. Auf diese Weise sorgt das Eigengewicht der Elektronikeinheit 18 dafür, dass eine elektrische Verbindung zwischen dem Kontaktteil 72 und dem Gegenkontakt 82 sichergestellt ist. Alternativ oder zusätzlich kann eine Verrastung (nicht dargestellt) zwischen der Elektronikeinheit 18 und der Elektrodenbaugruppe 76 und/oder der Wand vorgesehen sein, um einen sicheren elektrischen Kontakt zwischen dem Kontaktteil 72 und dem Gegenkontakt 82 zu gewährleisten.

In einer alternativen Ausführungsform kann die Elektrode 20 kein dezidiertes Kontaktteil 72 aufweisen. In diesem Fall liegt der Gegenkontakt 82 beispielsweise direkt an dem Halterungsabschnitt 66 an und stellt auf diese Weise die elektrische Verbindung zwischen der Elektronikeinheit 18 und der Elektrodenbaugruppe 76 her.

Der Halterungsabschnitt 66 der Elektrode 20 verläuft parallel zur angrenzenden Wand 28, wobei die Flachseite 67 des Halterungsabschnitts 66, d.h. die breite Seite quer zur Erstreckungsrichtung des Halterungsabschnitts 66, parallel zur Wand 28 steht.

Die Elektronikeinheit 18 sowie die Halterung 74 weisen eine zum Vorsprung 32 des Gehäuses 12 komplementäre Vertiefung 84 auf, die insbesondere eine formschlüssige Verbindung der Elektronikeinheit 18 und der Halterung 74 mit dem Vorsprung 32 des Gehäuses 12 bereitstellt.

Ferner kann sich die Vertiefung 84 in Richtung der Platine 56 zwischen die elektrischen Bauteile 58 und/oder dem Transformator 60 erstrecken, um Bauhöhe zu sparen. In einer alternativen Ausführungsform, in der sich die Platine 56 nicht quer über den Vorsprung 32 erstreckt, kann die Vertiefung 84 sich bis auf Höhe der Platine 56 oder darüber hinaus von den Kanälen 14, 16 weg erstrecken.

Auf diese Weise kann die Auslasseinheit 10 sehr kompakt aufgebaut sein. Ferner sind durch die asymmetrische Anordnung des Vorsprungs 32 sowie der Vertiefung 84 Montagefehler ausgeschlossen, die die Orientierung der Elektronikeinheit 18 sowie der Elektrodenbaugruppe 76 und damit der Elektrode 20 betreffen.

Die Vertiefung 84 ist zwischen dem ersten abgewinkelten Abschnitt 68 und dem zweiten abgewinkelten Abschnitt 70 angeordnet. Alternativ, kann die Elektrode 20 und/oder die Elektronikeinheit 18 derart relativ zum Vorsprung 32 angeordnet sein, dass die Vertiefung 84 an anderer Stelle in der Elektronikeinheit 18 und/oder der Elektrodenbaugruppe 76 verläuft, insbesondere wenn der Vorsprung nicht zwischen zwei abgewinkelten Abschnitten 68, 70 derselben Elektrode 20 angeordnet ist.

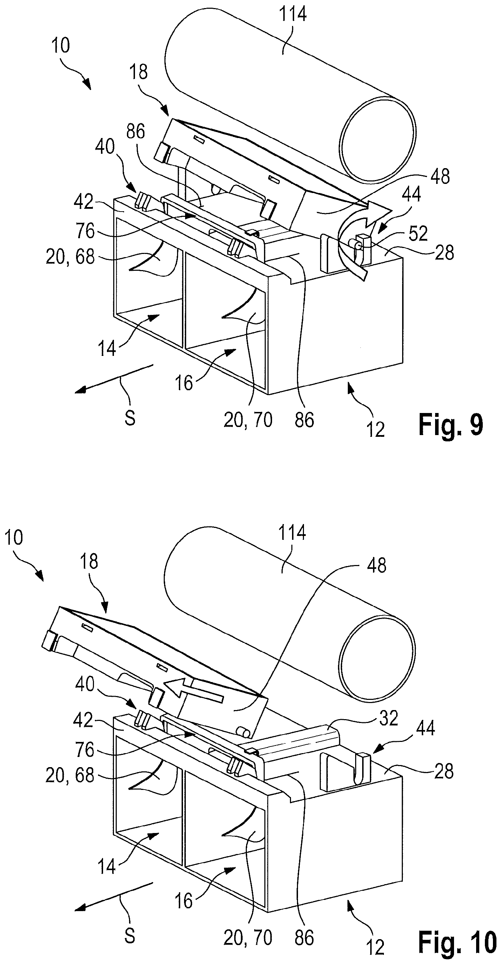

Der erste abgewinkelte Abschnitt 68 erstreckt sich in den ersten Kanal 14, während der zweite abgewinkelte Abschnitt 70 sich in den zweiten Kanal 16 erstreckt. Hierzu weist die an die Elektrodenbaugruppe 76 angrenzende Wand 28 jeweils einen Schlitz 86 auf, der sich in Strömungsrichtung S erstreckt (siehe Figur 9).

In einer weiteren alternativen Ausführungsform kann die Elektrodenbaugruppe 76 in das Gehäuse 12 integriert sein, beispielsweise indem es einstückig mit dem Gehäuse 12 ausgespritzt ist.

Um eine ausreichend hohe elektrische Feldstärke bereitzustellen, die für die Ionisierung des Luftstroms geeignet ist, weisen die abgewinkelten Abschnitte 68, 70 jeweils einen Endabschnitt 88 mit einer im entsprechenden Kanal 14, 16 frei endenden Spitze 90 auf.

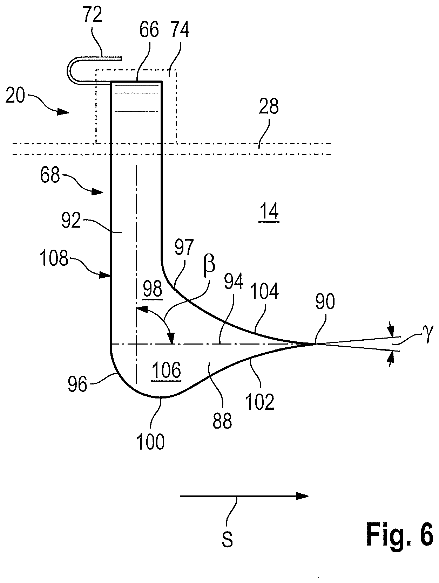

Da beide abgewinkelten Abschnitte 68, 70 eine im Wesentlichen identische Geometrie haben, wird die Geometrie für beide abgewinkelten Abschnitte 68, 70 im Folgenden anhand dem in Figur 6 gezeigten abgewinkelten Abschnitt 68 beschrieben.

Der abgewinkelte Abschnitt 68 weist einen Verbindungsabschnitt 92 auf, der sich an den Endabschnitt 88 einstückig anschließt und sich bis zum Halterungsabschnitt 66 der Elektrode 20 erstreckt.

Die Verbindungsabschnitt 92 erstreckt sich hierbei unter einem Winkel β von 90° zur Erstreckung 94 der Spitze 90 und bildet gemeinsam mit dem Endabschnitt 88 einen L-förmigen Abschnitt. Alternativ kann der Winkel β einen beliebigen Wert haben, insbesondere einen Wert der im Bereich von 60° bis 120° liegt.

Bogenförmige Randbereiche 96, 97 begrenzen den Übergang 98 vom Verbindungsabschnitt 92 zum Endabschnitt 88.

Der Endabschnitt 88 wird durch einen konvex geformten Randbereich 100, an den sich ein konkav geformter Randbereich 102 anschließt, sowie einem zum konkav geformten Randbereich 102 entgegengesetzt angeordneten konkaven Randbereich 104 gebildet.

Der konkav geformte Randbereich 102 sowie der konkav geformte Randbereich 104 verlaufen bis zur Spitze 90. Alternativ kann der konkav geformte Randbereich 102 und/oder der konkav geformte Randbereich 104 vor der Spitze 90 enden und beispielsweise (jeweils) in einer Geraden bzw. einer Tangente münden, die bis zur Spitze 90 verläuft.

Der Endabschnitt 88 weist im Bereich der Spitze 90 einen Winkel γ von 8° auf, d.h. die konkav geformten Randbereiche 102, 104 treffen in der Spitze 90 unter dem Winkel γ von 8° aufeinander. In einer alternativen Ausführungsform kann der Winkel γ einen Wert kleiner 90°, vorzugsweise kleiner 30°, weiter bevorzugt kleiner 15°, insbesondere kleiner 10° aufweisen.

Durch den konvex geformten Randbereich 100 und den sich an den konvex geformten Randbereich anschließenden konkav geformten Randbereich 102 weist der Endabschnitt 88 auf der dem Verbindungsabschnitt 92 abgewandten Seite einen Abschnitt 106 auf, der die Form einer Hälfte eines zweidimensionalen Tropfens hat.

Die Spitze 90 weist in Strömungsrichtung S, d.h., die Erstreckung 94 der Spitze 90 ist parallel zur Strömungsrichtung S.

Der Krümmungsradius der Spitze 90 beträgt 0,005 mm und somit der Hälfte der Materialdicke D des Flachmaterials. Alternativ kann der Krümmungsradius der Spitze 90 auch kleiner sein als die Hälfte der Materialdicke D des Flachmaterials.

Der Teil des abgewinkelten Abschnitts 68, der sich von der Wand 28 in den Kanal 14 hinein erstreckt, ist der in den Kanal 14 hineinragende Abschnitt 108 des abgewinkelten Abschnitts 68.

Durch die zuvor beschriebenen Merkmale weist der in den Kanal 14 hineinragende Abschnitt 108, insbesondere in Seitenansicht und quer zur Strömungsrichtung, bis zur Spitze 90 keine Ecken auf und ist dadurch besonders stromlinienförmig.

Die in die Kanäle 14, 16 hineinragenden Abschnitte 108 der abgewinkelten Abschnitte 68, 70 stehen jeweils senkrecht zur an die Halterung 74 angrenzende Wand 28 sowie frei in die Kanäle 14, 16, d.h., ohne durch eine Struktur, beispielsweise eine Stützstrebe, gestützt zu werden (siehe Figur 1).

Des Weiteren sind die in die Kanäle 14, 16 hineinragenden Abschnitte 108 so ausgerichtet, dass die entgegengesetzt zueinander angeordneten Flachseiten der in die Kanäle 14, 16 hineinragenden Abschnitte 108 parallel zur Strömungsrichtung S verlaufen.

Ferner sind die in die Kanäle 14, 16 hineinragenden Abschnitte 108 derart angeordnet, dass die jeweilige Spitze 90 in der Mitte 112 des Kanalquerschnitts des entsprechenden Kanals 14, 16 endet. Die Mitte 112 ist dabei ein Kreis, der konzentrisch zum Mittelpunkt X des Kanalquerschnitts steht und eine Fläche aufweist, die 10% des Kanalquerschnitts beträgt. Somit weist die Spitze 90 einen maximale Abstand zu den Kanalwänden 22, 24, 26, 28, 30 auf und ist im Bereich des Kanals 14, 16 mit dem größten Volumenstrom angeordnet, wodurch die Menge der im Luftstrom erzeugten Ionen besonders hoch ist.

Diese Anordnung und Ausrichtung der in die Kanäle 14, 16 hineinragenden Abschnitte 108 gewährleistet, dass der Strömungswiderstand des Kanals 14, 16 nicht wesentlich erhöht ist. Ferner werden Verwirbelungen im Luftstrom vermieden, sodass Störgeräusche unterdrückt sind. Des Weiteren ist die Erzeugung von Ozon reduziert.

Die Elektronikeinheit 18 sowie die Elektrodenbaugruppe 76 sind Wechselteile, die gemeinsam oder getrennt voneinander austauschbar sind, beispielsweise um das entsprechende Bauteil bei einem Defekt zu ersetzen.

Ferner sind die Elektronikeinheit 18 und die Elektrodenbaugruppe 76 jeweils als ein Steckteil ausgebildet, wodurch sie in das Gehäuse 12 bzw. den vorgesehenen Bauraum eingesteckt werden können. Vorzugsweise sind hierzu keine Werkzeuge und/oder Befestigungsmittel erforderlich, sodass die Montage besonders einfach durchführbar ist.

Aufgrund der kompakten Gestaltung der Elektronikeinheit 18 und der separat von der Elektronikeinheit 18 ausgebildeten Elektrodenbaugruppe 76 ist nur ein geringer Raum erforderlich, um die Elektronikeinheit 18 und die Elektrodenbaugruppe 76 zu montieren bzw. demontieren. Somit kann die Auslasseinheit 10 direkt unter einer anderen Fahrzeugstruktur, wie der in Figur 1 gezeigten Querstrebe 114 angeordnet sein, solange ein eine ausreichende lichte Höhe H zwischen der Elektronikeinheit 18 und der Querstrebe 114 vorhanden ist. Die lichte Höhe H ist hierbei der kleinste Abstand zwischen der Elektronikeinheit 18 und der Querstrebe 114 in eingebautem Zustand der Elektronikeinheit 18.

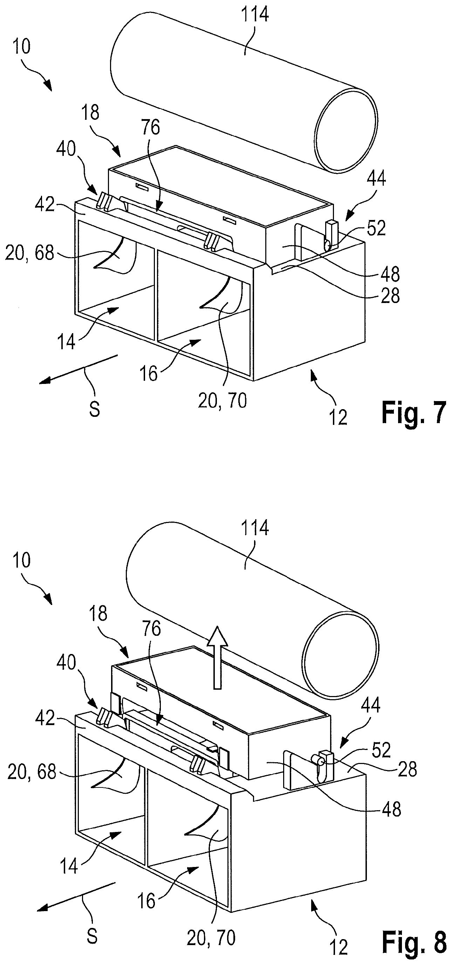

Die minimale lichte Höhe H zwischen der Elektronikeinheit 18 und der Querstrebe 114, die für einen Ein- sowie Ausbau der Elektronikeinheit 18 und die Elektrodenbaugruppe 76 erforderlich ist, hängt von einer Vielzahl von Faktoren ab, unter anderem von der Relativposition der Querstrebe 114 in Strömungsrichtung S zur Elektronikeinheit 18, von der jeweiligen Höhe, in die sich die Ankervorrichtung 44 sowie die Einführhilfe 40 senkrecht zur Wand 28 erstrecken, und davon, ob und wie weit die Elektronikeinheit 18 um eine Achse gedreht werden kann, insbesondere die Achse, die durch die beiden Ankerzapfen 52 verläuft. In der in Figur 7 gezeigten Ausführungsform, bei der die Höhe, in die sich die Ankervorrichtung 44 sowie die Einführhilfe 40 senkrecht zur Wand 28 erstrecken, jeweils etwa 90% der Höhe h der Elektronikeinheit 18 (siehe Figur 2) beträgt, entspricht die minimale lichte Höhe H ebenfalls dieser Strecke, d.h. etwa 90% der Höhe h, falls die Elektronikeinheit 18 nicht gedreht werden kann bzw. darf. Ist es jedoch möglich die Elektronikeinheit 18 zu drehen, wie es im vorliegenden Ausführungsbeispiel der Fall ist (siehe Figur 9), kann dadurch eine geringere minimale lichte Höhe H als 90% der Höhe h erforderlich sein..

In einer alternativen Ausführungsform kann die minimale lichte Höhe H weniger als 50%, vorzugsweise weniger als 100%, insbesondere weniger als 150% der Höhe h der Elektronikeinheit 18 betragen.

Um die korrekte Montage der Elektrodenbaugruppe 76 zu vereinfachen sowie um sicherzustellen, dass die sehr dünnen abgewinkelten Abschnitte 68, 70 beim Einsetzen in die Kanäle 14, 16 nicht beschädigt werden, ist die Einführhilfe 40 vorgesehen. Die Einführhilfe 40 umfasst für jeden in den Kanal 14, 16 hineinragenden Abschnitt 108 ein Einführmittel 116 mit einer Nut 118, die sich in Strömungsrichtung S sowie parallel zu den Seitenwänden 22, 26 erstreckt und die zur Aufnahme bzw. Führung des in den Kanal 14, 16 hineinragenden Abschnitts 108, insbesondere des Verbindungsabschnitts 92, während der Montage vorgesehen ist. In einer alternativen Ausführungsform, insbesondere in der die in den Kanal 14, 16 hineinragenden Abschnitte 108 nicht parallel zur Strömungsrichtung S angeordnet sind, kann die Nut 118 eine andere Ausrichtung aufweisen.

Im Folgenden wird Anhand der Figuren 7 bis 14 das Verfahren zum Herausnehmen sowie zur Montage der Elektronikeinheit 18 und der Elektrodenbaugruppe 76 beschrieben.

In Figur 7 ist die Auslasseinheit 10 im fertig montierten Zustand gezeigt. Die Elektrodenbaugruppe 76 ist angrenzend an die Wand 28 sowie in Strömungsrichtung S an den Steg 42 positioniert und die in die Kanäle 14, 16 hineinragenden Abschnitte 68, 70 sind jeweils im entsprechenden Kanal 14, 16 angeordnet. Die Elektronikeinheit 18 ist ebenfalls angrenzend an die Wand 28 positioniert sowie ferner formschlüssig in (mit den Ankerzapfen 52) als auch zwischen den Ankereinrichtungen 46, 47 angeordnet. Die Elektrodenbaugruppe 76 ist hierbei formschlüssig in der Aussparung 80 aufgenommen und das Kontaktteil 72 mit dem Gegenkontakte 82 elektrisch verbunden (siehe Figur 4). In dieser Position ist die Elektronikeinheit 18 in und entgegen der Strömungsrichtung S sowie quer zur Strömungsrichtung S in einer Ebene parallel zur Wand 28 nicht verschiebbar befestigt. Die Elektrodenbaugruppe 76 ist zwischen den Gehäuse 12 und der Elektronikeinheit 18 eingeklemmt bzw. formschlüssig aufgenommen und damit ebenfalls befestigt.

Zum Entfernen der Elektronikeinheit 18 wird diese senkrecht zur Wand 28 angehoben (siehe Figur 8), anschließend um die Achse der Ankerzapfen 52 gekippt, sodass die Elektronikeinheit 18 freigegeben ist (Figur 9), und nach vorne in Strömungsrichtung S entnommen (Figur 10).

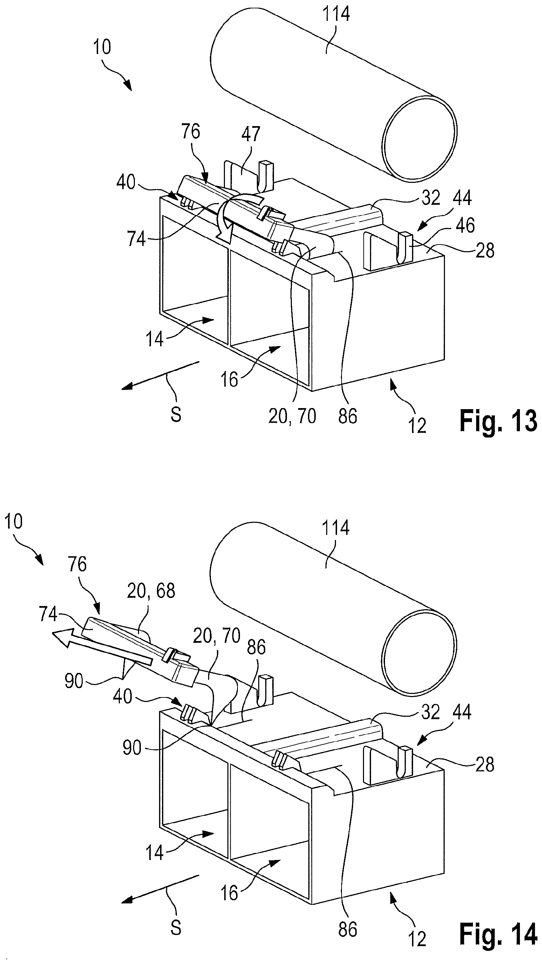

Im nächsten Schritt wird die Elektrodenbaugruppe 76 entnommen. Hierzu wird die Elektrodenbaugruppe 76 an der Einführhilfe 40 entlang geführt und dabei in einer kombinierten Bewegung von der Wand 28 abgehoben und gleichzeitig um eine Achse gedreht, die in Richtung der axialen (spannweitigen) Erstreckung der Halterung 74 verläuft (siehe Figuren 12 und 13). Mittels dieser Drehung werden die abgewinkelten Abschnitte 68, 70 durch die Schlitze 86 in der Wand 28 geführt und somit die Elektrodenbaugruppe 76 freigegeben. Nun wird im letzten Schritt die freigegebene Elektrodenbaugruppe 76 nach vorne in Strömungsrichtung S entnommen (siehe Figur 14).

Zur Montage der Elektronikeinheit 18 und der Elektrodenbaugruppe 76 wird das oben beschriebene Verfahren zur Entnahme der Bauteile im Wesentlichen in umgekehrter Abfolge durchgeführt.

Das bedeutet, die Elektrodenbaugruppe 76 wird mit der Halterung 74 an der Einführhilfe 40 so angelegt, dass die abgewinkelten Abschnitte 68, 70 in der jeweiligen Nut 118 der Einführmittel 116 aufgenommen und über den Schlitzen 86 angeordnet sind, wobei die Spitzen 90 in Richtung der Schlitze 86 weisen.

Nun wird die Elektrodenbaugruppe 76 an der Einführhilfe 40 entlang geführt und die abgewinkelten Abschnitte 68, 70 mittels einer Drehung der Elektrodenbaugruppe 76 durch die Schlitze 86 in die Kanäle 14, 16 eingeführt (siehe Figuren 11 bis 13). Anschließend werden die abgewinkelten Abschnitte 68, 70 so weit in die Kanäle 14, 16 eingeschoben, bis die Halterung 74 an der Wand 28 anliegt (siehe Figur 11). Der asymmetrisch angeordnete Vorsprung 32 und die dazu komplementär angeordnete Vertiefung 84 in der Halterung 74 stellen sicher, dass die Elektrodenbaugruppe 76 in korrekter Ausrichtung montiert wird.

Im Anschluss an die Elektrodenbaugruppe 76 wird die Elektronikeinheit 18 montiert. Hierzu wird die Elektronikeinheit 18 so über dem Gehäuse 12 angeordnet, dass die Aussparung 80 über der Elektrodenbaugruppe 76 und die Ankerzapfen 52 über den entsprechenden Ankereinrichtungen 46, 47 angeordnet sind (siehe Figur 9). Nun werden die Ankerzapfen 52 an den Einführschrägen 54 der Ankereinrichtungen 46, 47 entlang zu den Ankerabschnitten 50 geführt und die Elektronikeinheit 18 parallelen zur Wand 28 ausgerichtet (siehe Figur 8). In einem letzten Schritt wird die Elektronikeinheit 18 nun senkrecht zur Wand 28 abgesenkt und in die finale Position in Kontakt mit der Wand 28 sowie der Elektrodenbaugruppe 76 gebracht (siehe Figur 7).

Mit diesem Verfahren ist eine sichere Montage sowie Demontage der Elektronikeinheit 18 und der Elektrodenbaugruppe 76 gewährleistet. Ferner erfolgt die Montage bzw. Demontage werkzeugfrei und ohne zusätzliche Befestigungsmittel, wie Schrauben oder Klammern.

In einer alternativen Ausführungsform kann die Elektronikeinheit 18 und/oder die Elektrodenbaugruppe 76 nicht auswechselbar und fest mit dem Gehäuse 12 verbunden ausgebildet sein, beispielsweise mit diesem einstückig verspritzt.

Ferner kann die Elektrodenbaugruppe 76 gemäß einer weiteren alternativen Ausführungsform in die Elektronikeinheit 18 integriert sein, sodass diese ein einzelnes Bauteil bilden.

Gemäß einer alternativen Ausführungsform kann die Elektrode 20 in die Wand 28 integriert sein, sodass diese ein einzelnes Bauteil bilden. Insbesondere bildet in diesem Fall die Wand 28 die Halterung 74 der Elektrode 20.

In einer weiteren alternativen Ausführungsform kann die Elektrode 20 mehrere abgewinkelte Abschnitten 68, 70 aufweisen, die zur Ionisierung von einem oder mehreren Luftströmen, d.h. in einem oder mehreren Kanälen 14, 16, vorgesehen sind, wobei die abgewinkelten Abschnitten 68, 70 einstückig in einen gemeinsamen Halterungsabschnitt 66 übergehen.

Des Weiteren kann die Elektrodenbaugruppe 76 mehrere Elektroden 20 mit jeweils ein oder mehreren abgewinkelten Abschnitten 68, 70 aufweisen, die zur Ionisierung von einem oder mehreren Luftströmen vorgesehen sind.

Ferner ist die Auslasseinheit 10 nicht auf eine Ausführungsform mit zwei Kanälen 14, 16 beschränkt, sondern die Auslasseinheit 10 kann eine beliebige Anzahl an luftdurchströmten Kanälen 14, 16 umfassen.

Jede der zuvor beschriebenen Ausführungsformen stellt eine kompakte, kostengünstig herstellbare sowie laufruhige Fahrzeugklimaanlagen-Auslasseinheit 10 bereit.

Die Erfindung ist nicht auf die gezeigten Ausführungsformen beschränkt.

## Patentansprüche

1. Fahrzeugklimaanlagen-Auslasseinheit (10) mit zumindest einem von einer Wand (22, 24, 26, 28, 30) umgebenen Kanal (14, 16) und einer mit einer Spannungsquelle verbundenen Elektrode (20), **dadurch gekennzeichnet, dass** die Elektrode (20) zumindest einen in den zumindest einen Kanal (14, 16) hineinragenden abgewinkelten Abschnitt (68, 70) zur Ionisierung der durch den zumindest einen Kanal (14, 16) strömenden Luft umfasst, wobei der zumindest eine abgewinkelte Abschnitt (68, 70) eine im zumindest einen Kanal (14, 16) frei endende Spitze (90) und einen mit der Spitze (90) endenden Endabschnitt (88) aufweist, wobei die Spitze (90) in Strömungsrichtung (S) weist, wobei die Elektrode (20) einen im Bereich der Wand (28) vorhandenen Halterungsabschnitt (66) aufweist und der in den zumindest einen Kanal (14, 16) hineinragende Abschnitt (108) des zumindest einen abgewinkelten Abschnitts (68, 70) im zumindest einen Kanal (14, 16) frei verläuft.

2. Fahrzeugklimaanlagen-Auslasseinheit nach Anspruch 1, **dadurch gekennzeichnet, dass** die Spitze (90) in der Mitte (112) des Kanalquerschnitts endet.

3. Fahrzeugklimaanlagen-Auslasseinheit nach Anspruch 1 oder 2, **dadurch gekennzeichnet, dass** sich an den Endabschnitt (88) ein Verbindungsabschnitt (92) einstückig anschließt, der sich bis zum Halterungsabschnitt (66) der Elektrode (20) erstreckt und der zusammen mit dem Endabschnitt (88) eine L-Form ergibt, insbesondere wobei der Verbindungsabschnitt (92) in einem Winkel (β) im Bereich von 60-120°, vorzugsweise 90° zur Erstreckung (94) der Spitze (90) verläuft.

4. Fahrzeugklimaanlagen-Auslasseinheit nach Anspruch 3, **dadurch gekennzeichnet, dass** der Übergang (98) vom Verbindungsabschnitt (92) zum Endabschnitt (88) durch bogenförmig verlaufende Randbereiche (96, 97) begrenzt ist.

5. Fahrzeugklimaanlagen-Auslasseinheit nach Anspruch 4, **dadurch gekennzeichnet, dass** der Endabschnitt (88) auf einer dem Verbindungsabschnitt (92) abgewandten Seite einen konvex geformten Randbereich (100) hat, der die Form einer Hälfte eines zweidimensionalen Tropfens hat.

6. Fahrzeugklimaanlagen-Auslasseinheit nach einem der vorhergehenden Ansprüche, **dadurch gekennzeichnet, dass** der Halterungsabschnitt (66) unter Bildung einer Halterung (74) umspritzt ist.

7. Fahrzeugklimaanlagen-Auslasseinheit nach einem der vorhergehenden Ansprüche, **dadurch gekennzeichnet, dass** die Elektrode (20) aus einem Flachmaterial gebildet ist, wobei die entgegengesetzt zueinander angeordneten Flachseiten des zumindest einen abgewinkelten Abschnitts (68, 70) parallel zur Strömungsrichtung (S) verlaufen.

8. Fahrzeugklimaanlagen-Auslasseinheit nach einem der vorhergehenden Ansprüche, **dadurch gekennzeichnet, dass** mehrere nebeneinanderliegende Kanäle (14, 16) vorgesehen sind, in welche abgewinkelte Abschnitte (68, 70) mit im Wesentlichen identischer Geometrie hineinragen, und dass sämtliche abgewinkelte Abschnitte (68, 70) im Bereich einer Halterung (74) in einem gemeinsamen Halterungsabschnitt (66) einstückig ineinander übergehen, insbesondere wobei die Elektrode (20) im Bereich der Halterung (74) umspritzt ist.

9. Fahrzeugklimaanlagen-Auslasseinheit nach einem der vorhergehenden Ansprüche, **dadurch gekennzeichnet, dass** die Elektrode (20) aus einem Flachmaterial gebildet ist und einen Halterungsabschnitt (66) umfasst, wobei der zumindest eine abgewinkelte Abschnitt (68, 70) an den Halterungsabschnitt (66) angrenzt und in den zumindest einen Kanal (14, 16) hineinragt, insbesondere wobei der Halterungsabschnitt (66) parallel zum angrenzenden Wandabschnitt (28) verläuft und/oder der zumindest eine abgewinkelte Abschnitt (68, 70) bis zum Endabschnitt (88) im Wesentlichen senkrecht zum angrenzenden Wandabschnitt (28) in Richtung Kanalmitte verläuft.

## Claims

1. A vehicle air-conditioning system outlet unit (10) comprising at least one duct (14, 16) surrounded by a wall (22, 24, 26, 28, 30), and an electrode (20) connected to a voltage source, **characterized in that** the electrode (20) comprises at least one angled portion (68, 70) protruding into the at least one duct (14, 16) for ionization of the air flowing through the at least one duct (14, 16), wherein the at least one angled portion (68, 70) includes a tip (90) freely terminating in the at least one duct (14, 16) and an end portion (88) terminating with the tip (90), wherein the tip (90) points in the flow direction (S), wherein the electrode (20) includes a mounting portion (66) that is provided in the region of the wall (28), and the portion (108), protruding into the at least one duct (14, 16), of the at least one angled portion (68, 70) extends freely in the at least one duct (14, 16).

2. The vehicle air-conditioning system outlet unit according to claim 1, **characterized in that** the tip (90) terminates in the center (112) of the duct cross-section.

3. The vehicle air-conditioning system outlet unit according to claim 1 or 2, **characterized in that** the end portion (88) is integrally adjoined by a connecting portion (92) which extends to the mounting portion (66) of the electrode (20) and which together with the end portion (88) produces an L-shape, in particular wherein the connecting portion (92) extends at an angle (β) in the range of 60 to 120 degrees, preferably 90 degrees, to the extension (94) of the tip (90).

4. The vehicle air-conditioning system outlet unit according to claim 3, **characterized in that** the transition (98) from the connecting portion (92) to the end portion (88) is defined by edge regions (96, 97) extending in an arc shape.

5. The vehicle air-conditioning system outlet unit according to claim 4, **characterized in that** on a side facing away from the connecting portion (92), the end portion (88) has a convexly shaped edge region (100) which has the shape of one half of a two-dimensional drop.

6. The vehicle air-conditioning system outlet unit according to any of the preceding claims, **characterized in that** the mounting portion (66) is overmolded to form a mounting (74).

7. The vehicle air-conditioning system outlet unit according to any of the preceding claims, **characterized in that** the electrode (20) is formed of a flat material, wherein the flat faces, arranged opposite to each other, of the at least one angled portion (68, 70) extend parallel to the flow direction (S).

8. The vehicle air-conditioning system outlet unit according to any of the preceding claims, **characterized in that** a plurality of ducts (14, 16) placed side by side are provided, into which angled portions (68, 70) having a substantially identical geometry protrude, and **in that** all angled portions (68, 70) transition into each other in one piece in a shared mounting portion (66) in the region of a mounting (74), in particular wherein the electrode (20) is overmolded in the region of the mounting (74).

9. The vehicle air-conditioning system outlet unit according to any of the preceding claims, **characterized in that** the electrode (20) is formed of a flat material and comprises a mounting portion (66), wherein the at least one angled portion (68, 70) is adjacent to the mounting portion (66) and protrudes into the at least one duct (14, 16), in particular wherein the mounting portion (66) extends parallel to the adjacent wall portion (28) and/or the at least one angled portion (68, 70) extends substantially perpendicular to the adjacent wall portion (28) towards the center of the duct up to the end portion (88).

## Revendications

1. Unité de sortie (10) d'installation de climatisation de véhicule, comprenant au moins un canal (14, 16) entouré d'paroi (22, 24, 26, 28, 30) et une électrode (20) reliée à une source de tension, **caractérisée en ce que** l'électrode (20) comprend au moins un tronçon coudé (68, 70) faisant saillie dans ledit au moins un canal (14, 16) pour l'ionisation de l'air traversant ledit au moins un canal (14, 16), ledit au moins un tronçon coudé (68, 70) présentant une pointe (90) qui se termine de manière libre dans ledit au moins un canal (14,16), et un tronçon d'extrémité (88) qui se termine avec la pointe (90), la pointe (90) pointant dans le sens d'écoulement (S), l'électrode (20) présentant un tronçon de support (66) présent dans la zone de la paroi (28), et le tronçon (108) dudit au moins un tronçon coudé (68, 70) faisant saillie dans ledit au moins canal (14, 16) s'étendant de manière libre dans ledit au moins un canal (14, 16).

2. Unité de sortie d'installation de climatisation de véhicule selon la revendication 1, **caractérisée en ce que** la pointe (90) se termine au centre (112) de la section du canal.

3. Unité de sortie d'installation de climatisation de véhicule selon la revendication 1 ou 2, **caractérisée en ce qu'**un tronçon de raccordement (92) se raccorde d'un seul tenant au tronçon d'extrémité (88) et s'étend jusqu'au tronçon de support (66) de l'électrode (20) et forme, ensemble avec le tronçon d'extrémité (88), une forme en L, le tronçon de raccordement (92) s'étendant en particulier selon un angle (β) dans la plage 60 à 120°, de préférence égal à 90° par rapport à l'extension (94) de la pointe (90).

4. Unité de sortie d'installation de climatisation de véhicule selon la revendication 3, **caractérisée en ce que** la transition (98) du tronçon de raccordement (92) au tronçon d'extrémité (88) est délimitée par des zones de bord (96, 97) qui s'étendent en arc.

5. Unité de sortie d'installation de climatisation de véhicule selon la revendication 4, **caractérisée en ce que** le tronçon d'extrémité (88) présente, sur une face détournée du tronçon de raccordement (92), une zone de bord (100) de forme convexe qui présente la forme d'une moitié d'une goutte à deux dimensions.

6. Unité de sortie d'installation de climatisation de véhicule selon l'une des revendications précédentes, **caractérisée en ce que** le tronçon de support (66) est enrobé par injection en formant un support (74).

7. Unité de sortie d'installation de climatisation de véhicule selon l'une des revendications précédentes, **caractérisée en ce que** l'électrode (20) est réalisée en un matériau plat, les côtés plats dudit au moins un tronçon coudé (68, 70) qui sont agencés opposés l'un à l'autre s'étendant de manière parallèle au sens d'écoulement (S).

8. Unité de sortie d'installation de climatisation de véhicule selon l'une des revendications précédentes, **caractérisée en ce qu'**il est prévu une pluralité de canaux (14, 16) adjacents, dans lesquels des tronçons coudés (68, 70) à géométrie sensiblement identique font saillie, et **en ce que** tous les tronçons coudés (68, 70) se fondent d'un seul tenant l'un dans l'autre dans un tronçon de support commun (66) dans la zone d'un support (74), l'électrode (20) étant en particulier enrobée par injection dans la zone du support (74).

9. Unité de sortie d'installation de climatisation de véhicule selon l'une des revendications précédentes, **caractérisée en ce que** l'électrode (20) est réalisée en un matériau plat et comprend un tronçon de support (66), ledit au moins un tronçon coudé (68, 70) étant adjacent au tronçon de support (66) et faisant saillie dans ledit au moins un canal (14, 16), le tronçon de support (66) s'étendant en particulier de manière parallèle au tronçon de paroi (28) adjacent et/ou ledit au moins un tronçon coudé (68, 70) s'étendant jusqu'au tronçon d'extrémité (88) de manière sensiblement perpendiculaire au tronçon de paroi (28) adjacent en direction du centre du canal.
